# EUROPÄISCHE PATENTSCHRIFT

(11) **EP 4 442 950 B1**
(45) Veröffentlichungstag und Bekanntmachung des Hinweises auf die Patenterteilung: **03.12.2025**
(21) Anmeldenummer: 24155526.7
(22) Anmeldetag: 02.02.2024
(51) Int. Cl.: E06B 3/263, E06B 3/96, E06B 3/98, E06B 3/12

(54) **FENSTER-, TÜR- UND/ODER FASSADENKONSTRUKTION UND VERFAHREN ZUR HERSTELLUNG EINER ECKVERBINDUNG EINER FENSTER-, TÜR- UND/ODER FASSADENKONSTRUKTION**
WINDOW, DOOR AND/OR FACADE STRUCTURE AND METHOD FOR PRODUCING A CORNER CONNECTION OF A WINDOW, DOOR AND/OR FACADE STRUCTURE
CONSTRUCTION DE FENÊTRE, DE PORTE ET/OU DE FAÇADE ET PROCÉDÉ DE FABRICATION D'UN JOINT D'ANGLE D'UNE CONSTRUCTION DE FENÊTRE, DE PORTE ET/OU DE FAÇADE

(30) Priorität: 05.04.2023 DE 102023108789
(43) Veröffentlichungstag der Anmeldung: 09.10.2024
(73) Patentinhaber: SCHÜCO International KG, 33609 Bielefeld (DE)
(72) Erfinder: WIERSPECKER, Dieter, 49324 Melle (DE); LALK, Marvin, 32760 Detmold (DE); KÖNIG CASTRO, Marvin, 32584 Löhne (DE); BINNINGER, Steffen, 21641 Apensen (DE)
(74) Vertreter: Kleine, Hubertus

(56) Entgegenhaltungen:
- DE-A1- 1 759 375
- DE-A1- 102009 055 876
- DE-A1- 4 328 516
- US-A- 3 579 724

## Beschreibung

Die Erfindung betrifft eine Fenster-, Tür- und/oder Fassadenkonstruktion mit einer Eckverbindung und ein Verfahren zur Herstellung einer Eckverbindung.

Konstruktionen der vorgenannten Art mit verschweißten Eckverbindung sind an sich bekannt. Dabei wurden zumeist unbeschichtete Metallprofile miteinander über brennstoffbasierten Schweißverfahren unter Verwendung von Schweißzusätzen miteinander verbunden. Die Metallprofile weisen zumeist aufgrund des breitflächigen Wärmeeintrags Anlauffarben auf, welche durch nachträgliche Beschichtung kaschiert werden. Ein Beschichten eines voluminösen Rahmens oder einer Tür ist dabei deutlich aufwendiger als das Beschichten von Einzelprofilen.

Darüber hinaus sorgen die vorgenannten Schweißverfahren für die Ausbildung breiter unansehnlicher Schweißnähte mit großem Überstand gegenüber den benachbarten Bereichen.

Der Überstand kann durch Abschleifen abgetragen werden, wodurch allerdings etwaige Beschichtungen, sofern vorhanden, zur Gänze ebenfalls abgetragen werden. Eine Nachbeschichtung ist in diesem Fall zwingend erforderlich.

Laserschweißverfahren zur Herstellung von Eckverbindungen sind aus der DE 43 28 516 A1 und der DE 10 2009 055 876 A1 bekannt.

Weitere geschweißte Eckverbindungen findet man in der US 3 579 724 A und der DE 1 759 375 A1 offenbart.

Ohne Abschleifen erhält mal somit eine optisch und haptisch wenig ansprechende Eckverbindungen. Mit Abschleifen erhöht sich der Arbeitsaufwand durch eine Nachbeschichtung erheblich, da ein entsprechendes Beschichtungsmaterial großflächig im Bereich der Eckverbindung aufgetragen werden muss.

Aufgabe der Erfindung ist es daher eine ansehnliche verschweißte Eckverbindung mit geringem Arbeitsaufwand bereitzustellen.

Die erfindungsgemäße Aufgabe wird gelöst durch eine Fenster-, Tür- und/oder Fassadenkonstruktion mit den Merkmalen des Anspruchs 1. Und durch ein Verfahren zur Herstellung einer Eckverbindung mit den Merkmalen des Anspruchs 15.

Die erfindungsgemäße Fenster-, Tür- und/oder Fassadenkonstruktion umfasst eine Eckverbindung mit zumindest zwei miteinander durch eine oder mehrere Schweißverbindungen verbundene Metallprofile, vorzugsweise beschichtete Metallprofile, die Schweißverbindung oder Schweißverbindungen als eine laserverschweißte Verbindung ausgebildet ist oder bei mehreren Schweißverbindungen als mehrere laserverschweißte Verbindungen ausgebildet sind.

Das Laserschweißen ermöglicht hierbei einen maßhaltigen und zielgenauen Wärmeeintrag, so dass beschichtete Metallprofile verschweißbar sind, bei geringen sichtbaren Schäden am Profil, insbesondere an der Beschichtung des Profils.

Als Metallprofile können somit sowohl unbeschichtete Metallprofile, wie z.B. aus Stahl, Buntmetalle, Aluminium, Edelstahl, genutzt werden. Insbesondere und besonders vorteilhaft können allerdings auch bereits beschichtete Metallprofile genutzt werden. Als Beschichtungssysteme können alle beliebigen Systeme, wie z.B. Pulver-, Eloxaloberflächen- und/oder Nasslackbeschichtungen, und/oder galvanische Überzüge und/oder Folierungen genutzt werden.

Das Laserschweißen wird ohne Schweißzusätze realisiert.

Ohne Schweißzusätze erfolgt kein zusätzlicher Materialauftrag auf das Material der Metallprofile. Ein Abbrennen von Beschichtungsmaterial durch Kontakt mit dem Schweißzusatz wird hierbei vorteilhaft vermieden.

In vielen Situationen kann es notwendig sein, dass das Fenster, die Tür oder die Fassade eine besonders gute Maßhaltigkeit gegenüber einem Rahmen, z.B. einem Tür- oder Fensterrahmen, einhalten. Bei stark überstehenden Schweißverbindungen kann das Schließen des Fensters oder der Tür behindert werden. Überdies können Dichtungen beim Schließen lokal besonders stark komprimiert werden, so dass es an dieser Stelle der Dichtungen zu einer unerwünschten höheren mechanischen Belastung kommt. Auch dies wird durch die Verwendung von Laserschweiß-Verbindungen vermieden, welche als keine oder nur geringe Vorsprünge gegenüber den benachbarten Bereichen ausgebildet sind.

Vorteilhafte Ausgestaltungen der Erfindung sind Gegenstand der Unteransprüche.

Erfindungsgemäß ist die Schweißverbindung durch lokale Änderung des Metallgefüges gegenüber den benachbarten Bereichen als geringe Vertiefung ausgebildet.

Dies hat den besonderen Vorteil, dass eine nachträgliche Beschichtung im Schweißbereich zu einer Einebnung gegenüber den benachbarten Bereichen führen kann, so dass eine insgesamt ebene Fläche ohne optische oder haptische Wahrnehmung des Schweißbereichs ausgebildet werden kann.

Benachbart zur laserverschweißten Verbindung kann ein lackierter Bereich als Abbrandbereich ausgebildet sein, welcher Produkte der thermischen Zersetzung des Lackes des lackierten Bereichs aufweist. Jenseits dieses Abbrandbereichs kann ebenfalls eine Lackierung der Metallprofile vorgesehen sein, allerdings, ohne dass thermische Zersetzungsprodukte quantitativ in der Lackzusammensetzung oder in der Schweißbadzusammensetzung der lasergeschweißten Verbindung enthalten sind.

Der besagte Abbrandbereich erstreckt sich dabei vorteilhaft in einer Breite von weniger als 2 mm, vorzugsweise weniger als 1 mm, von der lasergeschweißten Verbindung weg. Ein solch geringer Abbrandbereich ist wünschenswert und ist durch das Laserschweißen erreichbar, insbesondere bei Anwendung eines Faserlaser-Schweißgerätes.

Es ist von Vorteil, wenn die Schweißverbindung die Metallprofile der Eckverbindung unmittelbar miteinander verbindet.

Eine unmittelbare Verbindung ist eine Schweißverbindung, welche einen Schweißbereich an jedem der beiden Profile aufweist.

Die Schweißverbindung kann vorteilhaft für eine besonders stabile Verbindung zumindest bereichsweise entlang einer Gehrung entlang einer Sichtseite der Eckverbindung angeordnet sein. Die Sichtseite weist eine besondere breite Kontaktfläche beider Metallprofile auf, so dass hier eine sehr umfassendere Verbindung über die gesamte Breite der Sichtseite erfolgen kann. Besonders bevorzugt ist die Schweißverbindung umlaufend, also um den gesamten außenseitigen Verbindungsbereich der beiden Profile, entlang der Gehrung der Eckverbindung angeordnet.

Die Schweißverbindung kann vorteilhaft zumindest entlang einer Außenseite senkrecht zur Sichtseite der Eckverbindung angeordnet sein. Diese Schweißverbindung ist nach der Montage quasi unsichtbar und damit für den Endnutzer besonders ansprechend.

Die Schweißverbindung kann die Profile mittelbar, vorzugsweise mittels eines Eckverbinderwinkels miteinander verbinden. Dabei kann die Verbindung insbesondere entlang der vorgenannten Außenseite senkrecht zur Sichtseite angeordnet sein. Durch die mittelbare Verbindung durch den Eckverbinderwinkel kann eine noch breitflächigere und damit stabilere Verbindung der beiden Profile erfolgen.

Die Schweißverbindung kann vorteilhaft als Schweißnaht einen Längsverlauf aufweist, welche parallel zur Längsachse A des jeweiligen Metallprofils verläuft. Analog kann auch eine Flächenschweißgeometrie eine Haupterstreckungsrichtung parallel zur Längsachse des jeweiligen Metallprofils aufweisen. Hier ist von einer besonders breiten Auflagefläche einer Profilwandung mit einem Schenkel des Eckverbinderwinkels auszugehen.

Die Profile können jeweils Profilkammern aufweist, wobei der Eckverbinderwinkel zumindest zwei Schenkel aufweist, welche in den Profilkammern eingesteckt sind.

Der Eckverbinderwinkel kann konstruktiv derart ausgebildet sein, dass es zum Aufbau einer Vorspannung zwischen zwei aneinander anliegenden Kontaktflächen im Kontaktbereich der Metallprofile im montierten Zustand der Eckverbindung kommt. Dadurch werden die Profile zusätzlich gegeneinander gepresst, so dass ein Eindringen von Schmutz und Flüssigkeit, z.B. Regenwasser, im Bereich der Eckverbindung zusätzlich verhindert wird.

Die Längsachsen der Schenkel des Eckverbinderwinkels können einen ersten Winkel definieren, wobei eine aus beiden Schenkeln gebildete Winkelinnenfläche im Kontaktbereich beider Schenkel eine Ausnehmung aufweist.

Alternativ oder zusätzlich kann die Winkelinnenfläche einen zweiten Winkel definieren, welcher kleiner ist als der erste Winkel. Analog zur Ausnehmung wird durch die vorbeschriebene Ausgestaltung der Winkelinnenfläche durch Anziehen des Materials beim Erkalten der Schweißverbindung eine Vorspannung aufgebaut. Beispielsweise kann der Eckverbinder bei dieser Variante besonders bevorzugt als Vollmaterial-Eckverbinderwinkel ausgebildet sein.

Alternativ oder zusätzlich können zwei Schenkel des Eckverbinderwinkels als Federschenkel zum Abstützen gegen eine Profilwandung ausgebildet sind. Dieses Abstützen ermöglicht ein breitflächiges Verschmelzen beim Durchschwei-ßen, z.B. unter Aufleiten des Laserstrahls auf die Profilswand von der entgegengesetzten Seite zu der Seite, an welcher sich der Federschenkel abstützt. Insbesondere kann der Federschenkel über zwei Anlagewandungen ausgebildet sein, zwischen denen ein Federsteg ausgebildet ist. Erfolgt ein Druck auf die Anlagewandungen unter Verringerung des Abstandes der Anlagewandungen, so erfährt der Federsteg eine Biegeverformung unter Ausbildung einer Rückstellkraft.

Die Schweißverbindung kann vorteilhaft innerhalb einer Nut des Profils, vorzugsweise entlang eines Nutbodens, besonders bevorzugt entlang einer Kedernut, angeordnet sein. Durch die Schweißverbindung kann es zu einer geringen Aufrauhung der Oberfläche kommen. Dies bildet einen natürlichen Stop bei der Montage bzw. beim Einfädeln einer Kederfahne eines Dichtungskeders. Oftmals ist es bei langen Profilen für den Monteur schwierig das Ende der Nut zu finden. Meist wird der Keder dann an beiden Enden des Profils auf die Länge des Profils zugeschnitten. Wenn das Profil einen natürlichen Stop vorgibt, weiß der Monteur, dass er nicht mehr Kederdichtung in die Nut einfädeln muss. Die Schweißverbindung ermöglicht hier einen zusätzlichen Montagevorteil.

Die Schweißverbindung kann als eine durchgeschweißte Schweißverbindung ausgebildet sein, derart, dass zumindest eine Profilwandung über die Gesamtstärke der Profilwand ein erstarrtes Schmelzbad bildet. Sofern ein Eckverbinderwinkel eingesetzt wird, so bildet auch ein Teilbereich des Eckverbinderwinkels einen Teil des Schmelzbades. Insofern kann sowohl bei der unmittelbaren als auch bei der mittelbaren Verbindung der Metallprofile mittels Eckverbinderwinkel durch Laserverschweißung eine durchgeschweißte Schweißnaht mit einem entsprechenden erstarrten Schmelzbad über die gesamte Dicke der Profilwandung vorliegen.

Ebenfalls erfindungsgemäß ist ein Verfahren zur Herstellung einer Eckverbindung einer Fenster-, Tür- und/oder Fassadenkonstruktion. Dabei kann es sich vorteilhaft um die vorbeschriebene erfindungsgemäße Fenster-, Tür- und/oder Fassadenkonstruktion handeln.

In einem ersten Schritt erfolgt ein Bereitstellen zweier Metallprofile, vorzugsweise beschichteter Metallprofile. Ein besonders vorteilhafter Aspekt der Verwendung des Laserschweißens ist, dass aufgrund der sehr begrenzten Erwärmung es zu keiner Schädigung oder nur zu einem geringen lokalen und damit leicht zu reparierenden Schädigung der Beschichtung. Dabei kann das bereits vorhandene Laserschweißgerät auch gleich zur Nachbearbeitung der Beschichtung im Schweißbereich genutzt werden. Der Laser kann z.B. Beschichtungspartikel schmelzen, so dass sich diese im flüssigen Zustand im Schweißbereich verteilen können.

Die Partikel können aus der bestehenden Beschichtung stammen oder aber aus einer nachträglich auf die Schweißverbindung aufgetragenes Beschichtungsmaterial. Dies kann z.B. durch lokales Sputtern erfolgen.

Ein winkliges Aneinander-Positionieren beider Metallprofile kann z.B. das Aneinanderlegen zweier Kontaktflächen der beiden Metallprofile umfassen. Dabei wird an dieser Stelle ein Kontaktbereich gebildet.

In einem weiteren Schritt folgt auf das Aneinanderlegen ein Verschweißen beider Metallprofile unter Verwendung eines Laser-Schweißgerätes, insbesondere eines Faserlaser-Schweißgerätes. Das Verschweißen kann unmittelbar im Kontaktbereich der beiden Metallprofile erfolgen oder außerhalb des Kontaktbereichs insbesondere unter Verwendung eines Eckverbinderwinkels als Hilfsmittel.

Zur Schaffung einer mechanisch-stabilen Verbindung ist die Leistung des Laser-Schweißgerätes derart eingestellt, so dass eine durch eine Profilwandung und/oder entlang einer im Kontaktbereich zweier Profilwandungen durchgeschweißte Schweißverbindung bereitgestellt wird.

Vorteilhafte Ausgestaltungen des Verfahrens sind Gegenstand der Unteransprüche.

In einer ersten Variante des Verschweißens erfolgt das Bereitstellen in Schritt a) unter Ausbildung zweier spitz-zulaufender Stirnflächen der Profilwandungen der Metallprofile, insbesondere durch Konturfräsen.

Die Spitze der Stirnflächen können aus Sicherheitsgründen auch endständig abgerundet sein.

Das Aneinander-Positionieren der Metallprofile erfolgt vorzugsweise derart, dass die Stirnflächen mit einem erhöhten Anpressdruck derart gegeneinander gepresst werden, dass eine randseitige Umformung der beiden Profilwände unter Einwirkung des Anpressdrucks erfolgt.

Bevorzugt kommt es dabei zur Ausbildung einer Bördelung.

Im Anschluss an das Umformen erfolgt ein Verschweißen im Kontaktbereich des umgeformten Randbereichs unter Ausbildung der durchgeschweißten Schweißverbindung. Dies bedeutet, dass das Schweißen und damit das Verschmelzen über den gesamten Bereich der aneinander anliegenden Kontaktflächen beider Metallprofile erfolgt.

Dabei erfolgt das Verschweißen insbesondere auch im Bereich der Sichtflächen einer Fenster-, einer Tür- oder einer Fassadenkonstruktion

Alternativ oder zusätzlich kann das Verschweißen auch auf eine andere vorteilhafte Variante erfolgen.

Dabei erfolgt das Bereitstellen durch ein Einführen jeweils eines Schenkels des Eckverbinderwinkels in eine Profilkammer des jeweiligen Metallprofils, so dass in jedem der beiden Metallprofile jeweils ein Schenkel des Eckverbinderwinkels angeordnet ist. Dabei erfolgt das Anliegen des Eckverbinderwinkels möglichst breitflächig an der inneren Seite der Profilwandung der Profilkammer, so dass sich beim Erwärmen der Profilkammer eine Übertragung des Wärmeflusses auf den Eckverbinderwinkel ergibt. Dadurch ergibt sich eine besonders breitflächige und vollständige Verschmelzung beider Bauteile im Rahmen der Verschweißung.

Zwischen jedem Metallprofil und dem Eckverbinderwinkel wird eine durchgeschweißten Schweißverbindungen, vorzugsweise unter Ausbildung einer Vorspannung, gebildet. Eine Vorspannung kann unter Ausnutzung der Längenausdehnung beim Erwärmen und der Materialverkürzung beim Erkalten des geschmolzenen Materials erfolgen. Das Erzeugen der Vorspannung kann durch konstruktiv durch das Design des Eckverbinderwinkels zusätzlich unterstützt werden. Die Vorspannung kann besonders optimal bei zwei aus Gehrung geschnittenen Metallprofilen ausgebildet werden.

Besonders bevorzugt erfolgen die Schweißverbindungen außerhalb des Kontaktbereichs und sie sind besonders bevorzugt außerhalb der Sichtseite der beiden Metallprofile angeordnet.

Es ist allerdings auch möglich, eine Schweißverbindung nach der ersten Variante des Verschweißens auszubilden, mit einer Schweißverbindung im Kontaktbereich und zusätzlich Schweißverbindungen über einen Eckverbinderwinkel nach der zweiten Variante herzustellen.

Das Verfahren nach beiden vorgenannten Varianten kann überdies ein Nacharbeiten umfassen, welches eine weitere Laserbearbeitung zur Ausbildung einer Beschichtung, insbesondere durch Schmelzen von Beschichtungskomponenten und/oder durch strahlenaktivierte Vernetzung des Beschichtungsmaterials und/oder durch Verdunstung von Beschichtungsbestandteilen umfasst.

Das Nachbearbeiten kann überdies den Auftrag von zusätzlichem Beschichtungsmaterial im Bereich der Schweißverbindungen umfassen. Der Auftrag kann auf verschiedene Weise, z.B. als lösungsmittelhaltige Beschichtungszusammensetzung, als lösungsmittelfreie Polymerbeschichtung und/oder als partikuläre Beschichtungszusammensetzung erfolgen.

Es kann allerdings auch ein Verschmelzen von bereits bestehendem Beschichtungsmaterial aus benachbarten Bereichen der Schweißverbindung unter Ausbildung einer geschlossenen Beschichtungsfläche erfolgen.

Die Erfindung wird anhand der nachfolgenden Figuren anhand eines Ausführungsbeispiels näher erläutert. Die einzelnen Details des Ausführungsbeispiels sind in keinster Weise als beschränkend für den Gegenstand der vorliegenden Erfindung anzusehen. Vielmehr ergeben sich aus dem Ausführungsbeispiel für den Fachmann zahlreiche weitere Abwandlungsvarianten, die ebenfalls Teil der vorliegenden Erfindung soweit sie in den Bereich der beigefügten Ansprüche fallen. Es zeigt:
- Fig. 1: erste Perspektivansicht einer Eckverbindung zweier Profile einer Fenster-, Tür- oder Fassadenkonstruktion;
- Fig. 2: zweite Perspektivansicht einer Eckverbindung zweier Profile einer Fenster-, Tür- oder Fassadenkonstruktion;
- Fig. 3: Seitenansicht auf einen ersten Eckverbinder;
- Fig. 4: Seitenansicht auf einen zweiten Eckverbinder;
- Fig. 5a-5f: schematische Darstellungen mehrerer Schweißkonturen zur Herstellung der Eckverbinder;
- Fig. 6: schematische Schnittansicht auf ein Profil mit eingesetztem Eckverbinder zu Beginn einer Verschweißung;
- Fig. 7: schematische Schnittansicht auf ein Profil mit eingesetztem Eckverbinder am Ende einer Verschweißung;
- Fig. 8: Schnittansicht durch die Wandungen zweier zu verbindender Profile;
- Fig. 9: Schnittansicht der Fig. 8 nach einer Fügestellenformung;
- Fig. 10: Schnittansicht der Fig. 8 und 9 nach der Verschweißung.

Die vorliegende Erfindung betrifft ein Verfahren zur Herstellung einer Eckverbindung zweier Metallprofile einer Fenster-, Tür- oder Fassadenkonstruktion.

Das Verfahren erfolgt im Rahmen eines Durchschweißens einer Profilwandung oder einer Verbindungsstelle zweier Profilwandungen. Das Verschweißen erfolgt mittels eines Laserschweißverfahrens. Laserschweißen ist an sich bekannt und wird beispielsweise in der EP 0 238 171 A1 beschrieben.

Das Laserschweißen erfolgt erfindungsgemäß im Unterschied zu anderen Schweißtechniken ohne Schweißzusätze, welche für eine unerwünschte Materialverstärkung der Schweißnaht sorgen.

Ausgangsmaterial zur Herstellung der Eckverbindung sind Metallprofile. Dabei kann es sich beispielsweise um Edelstahlprofile oder Aluminiumprofile handeln.

Die Metallprofile sind besonders bevorzugt zumindest außenseitig beschichtet. Im Bereich der Kontaktflächen können die Metallprofile allerdings in an sich bekannter Weise bevorzugt unbeschichtet ausgebildet.

Das Laserschweißen kann nach zwei Varianten erfolgen, welche nachfolgend beschrieben werden.

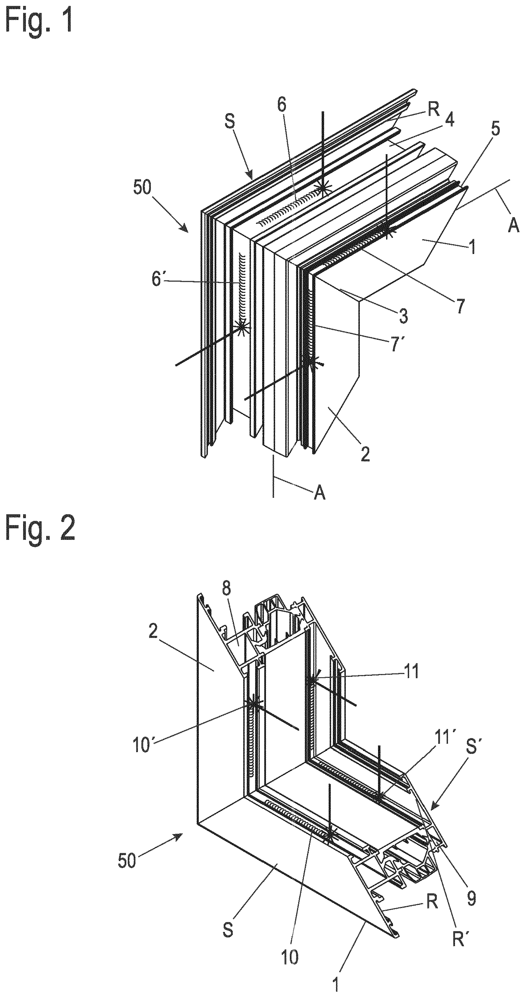

Die erste Variante erfolgt durch eine mittelbare Verschweißung der Profile 1 und 2 unter Verwendung eines Eckverbinderwinkels 12, 16 oder 32 beschrieben. Diese Variante ist insbesondere in den Fig. 1-7 erläutert.

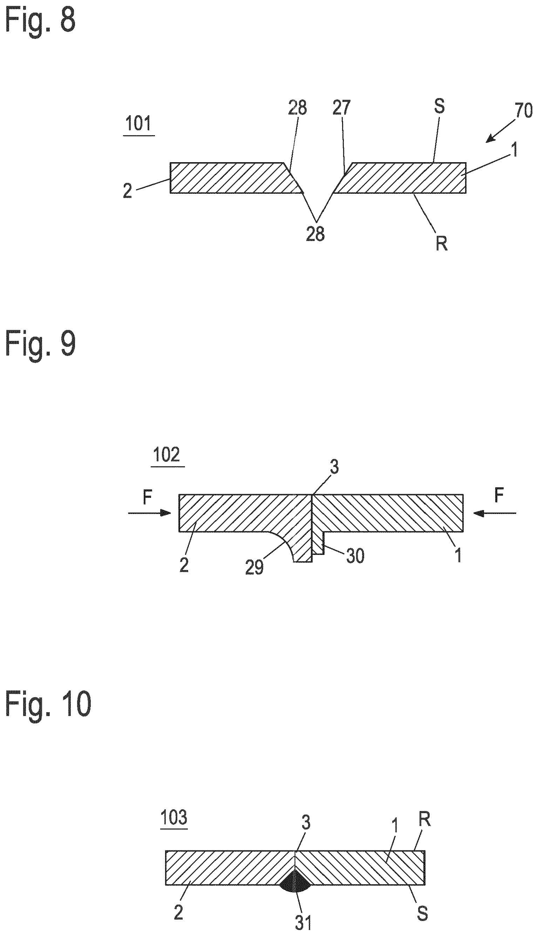

Die zweite Variante erfolgt durch eine unmittelbare Verschweißung der Profile 1 und 2 durch stoffschlüssige Verbindung der Kontaktflächen beider Profile 1 und 2 erreicht. Dies wird insbesondere anhand der Fig. 8-10 erläutert

Fig. 1 zeigt eine Eckverbindung 50 aus einem ersten Profil 1 und einem zweiten Profil 2. Die Profile 1 und 2 können ein Profil einer Tür-, einer Fenster- oder einer Fassadenkonstruktion sein. Dies betrifft somit u.a. sowohl eine Eckverbindung eines jeweiligen Türflügels oder Fensterflügels aber auch eine Eckverbindung eines jeweiligen Türrahmens oder Fensterrahmens. Sie weisen in an sich üblicher Bauweise eine Mehrzahl an Profilkammern, wie z.B. die Profilkammern 8 und 9 auf.

Die Kontaktflächen bilden einen Kontaktbereich 3. Die Kontaktflächen müssen allerdings nicht zwingend berühren, geringe Abstände, insbesondere unter 1 mm, zwischen den Profilen sind bei Produktionsungenauigkeiten unerwünscht allerdings möglich. Profile sind in Fig. 1 und 2 auf Gehrung gesägt, so dass die Kontaktflächen im Winkel von 45° zu der Längsachse A eines jeweiligen Profils 1 und 2 steht. Allerdings sind auch andere Formen von Kontaktbereichen möglich, z.B. mit Kontaktflächen senkrecht zur Längsachse A eines jeweiligen Profils, möglich.

Die Profile 1 und 2 weisen Nuten 4, 5, insbesondere Kedernuten auf, zur Aufnahme einer Kederfahne eines Dichtungskeders. Bei der Montage bzw. Einfädeln eines Dichtungskeders ist zumeist kein Endanschlag des Dichtungskeders vorgesehen. Das bedeutet zusätzlichen Montageaufwand beim Positionieren und Abgängen des Dichtungskeders während der Montage. Darüber hinaus ist der Dichtungskeder linear beweglich innerhalb der Nut.

Bei der Eckverbindung 50 der Fig. 1 weisen die Profile 1 und 2 jeweils eine Profilwandung mit einer Sichtseite S und einer Rückseite R auf. Dabei kann jedes der Profile, wie in Fig. 1 und 2 gezeigt, auch zwei Sichtseiten S und S' und entsprechend zwei Rückseiten R und R' aufweisen.

Innerhalb der Nuten 4 und 5 eines jeden Profils 1 und 2 sind Schweißverbindungen 6, 7, 6', 7' in Form von Schweißlinien oder Flächenschweißgeometrien aus einer Mehrzahl von Schweißlinien vorgesehen. Der Fachmann unterscheidet zwischen solchen Punktverschweißungen und Schweißlinien. Die Schweißlinien werden typischerweise als Schweißraupen bezeichnet, was zumeist einer ausgeprägten Materialwulst, welche durch Schmelzverformung und insbesondere durch Schweißzusätze ausgebildet wird.

Diese Materialwulst ist aus mehreren Gründen nachteilig. Im Sichtbereich verringert sie die optische Ansicht der Eckverbindung. Überdies ist sie anfällig gegen Rost und andere Umwelteinflüsse und muss, zumeist durch materialabhebende Prozesse wie Schleifen oder Fräsen, nachbearbeitet werden. Im überwiegenden Teil der Anwendungsfälle sind die in der Eckverbindung verarbeiteten Profile beschichtet. Die Beschichtung löst sich bei ausgeprägten Schweißraupen aufgrund von Oberflächenspannungen oder wird während der Nachbearbeitung abgetragen.

An den rahmenzugewandten Flächen oder den flügelzugewandten Flächen oder den Montageflächen zur Montage in einer Aussparung in einer Mauer behindern die Schweißraupen die exakte Einbaulage und können für eine Behinderung des Verschließens oder der Abdichtung des Fensters oder der Tür sorgen. In der Position innerhalb einer Nut 4 und 5, insbesondere einer Kedernut - wie in Fig. 1 und 2 - sorgen ausgeprägte Schweißraupen für ein stärkeres Einklemmen der Kederdichtung und erschweren das Verschließen des Fensters. Die in Fig. 1 und 2 dargestellten Schweißraupen weisen allerdings eine sehr geringe Ausprägung in der Höhe von vorzugsweise weniger als 1mm, besonders bevorzugt weniger als 0,5 mm, auf. Diese in den Abbildungen 1 und 2 dargestellten Beispiele fallen nicht in den Bereich der beigefügten Ansprüche.

Dadurch treten die vorgenannten Nachteile aufgrund der geringen Höhe der Schweißraupe nicht auf.

Fig. 2 zeigt eine Anordnung von Schweißraupen entlang Innenseite der Eckverbindung 50. Die Schweißverbindungen 10, 10', 11, 11' in Form von Schweißraupen erstrecken sich parallel zur Längsachse A des jeweiligen Profils 1 und 2.

Die Position und Längserstreckung der Schweißverbindung 6, 7 und 10, 11 als Schweißraupen erklärt sich dadurch, dass die die beiden Profile 1 und 2 indirekt über einen Eckverbinderwinkel miteinander verschweißt sind. Dabei verbinden die jeweiligen Schweißraupen jeweils einen in Fig. 1 und 2 nicht-dargestellten Eckverbinderwinkel mit der Profilwandung, welche den Boden der jeweiligen Nut 4 und 5 durch stoffschloss. Dabei wird ein Laserstrahl jeweils auf eine Außenfläche der Profilwand des Profils 1 und 2 geleitet, an welcher dieser das Profil derart stark erhitzt, dass es auf der entgegengesetzten Seite der Profilwand zu einem Stoffschluss mit dem Eckverbinderwinkel kommt. Dies bezeichnet man allgemein als durchgeschweißte Verbindung.

Um eine geringe Schweißnahthöhe bzw. eine geringe Höhe der Schweißraupe zu erhalten wird auf die Verwendung eines Schweißzusatzes verzichtet. Besonders bevorzugt ist die Schweißnaht gesehen von der Außenfläche des Profils eben mit den benachbarten Bereichen oder sogar als Absenkung gegenüber den benachbarten Bereichen ausgebildet.

Im Rahmen einer Nacharbeitung kann eine Glättung durch den Laser erfolgen, so dass die ebene Anordnung der Schweißnaht besser ausgebildet werden kann. Im Fall einer Absenkung kann ein Auftrag von zusätzlichem Beschichtungsmaterial, z.B. durch Sputtern oder dergleichen, erfolgen. Das Beschichtungsmaterial kann durch den Laser zusätzlich aufgeschmolzen und dadurch eine ebene Ausbildung mit den benachbarten Bereichen erzeugen. In diesen Bereichen ist die Dicke der Beschichtungsschicht entsprechend höher als in den benachbarten Bereichen.

Eine weitere Höhenreduzierung der Schweißnaht durch sehr präzisen Wärmeeintrag wird erreicht, wenn als Laserschweißgerät ein Faserlaser genutzt wird. Der Faserlaser kann als sogenannter Multikopf-Faserlaser ausgebildet sein, welcher es erlaubt, jeweils zwei oder mehr Schweißnähte, z.B. die Schweißnähte 6 und 7 oder 10 und 11 zeitgleich anzubringen.

Die Schenkel des Eckverbinderwinkels als Verbindungshilfsmittel sind in korrespondierenden Profilkammern 8 der beiden Profile 1 und 2 angeordnet und stabilisieren die Eckverbindung 50 zusätzlich. Idealerweise legen sich die verwendeten Eckverbinderwinkel flächig an die Profilwand an. Dies kann über Eckverbinderwinkel mit Federschenkeln erfolgen oder aber über Eckverbinderwinkel als Formkörper aus einem Vollmaterial

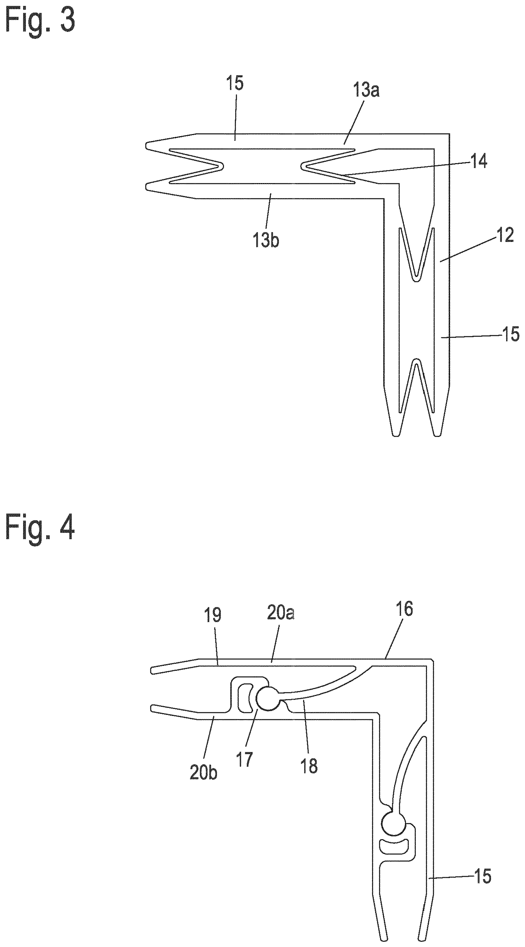

Die Fig. 3 und 4 zeigen zwei beispielhafte Varianten für Eckverbinderwinkel 12 und 16.

Fig. 3 zeigt einen Eckverbinderwinkel 12 mit zwei komprimierbaren Federschenkel 15, welche senkrecht zur Längserstreckung komprimierbar ausgebildet sind.

Die Federschenkel 15 umfassen jeweils zwei Anlagewandungen 13a und 13b zur Anlage in den Wandungen einer Profilkammer 8 und 9 und dazwischen angeordnete elastisch-verformbare Stege 14 mit einer Sollknickstelle. Die Federschenkel sind endständig verjüngend ausgebildet, so dass sie besser in die jeweilige Profilkammer einführbar sind. Der Abstand der Anlagewandungen 13a und 13b ist unter Einwirkung einer Kraft verringerbar unter Ausbildung einer Rückstellkraft. Dadurch können die Federschenkel 15 mit verringertem Abstand der Anlagewandungen 13a und 13b in die Profilkammer 8 oder 9 eingeführt werden und dann nach Rückstellung gegen die Profilkammerwandungen angepresst werden. Dadurch erfolgt ein optimaler Kontakt mit der Profilkammerwand beim Durchschweißen durch das Laserschweißen.

Alternativ zu den elastisch-verformbaren Stegen 14 können auch andere elastisch-verformbare Mittel vorgesehen sein. Dies kann eine andere Form von Stegen oder beispielsweise auch ein Elastomer zwischen den Anlagewandungen 13a und 13b sein. Der sehr zielgenaue Wärmeeintrag durch das Laserschweißen ermöglicht auch die Verwendung von Kunststoffen, welche nicht hitzestabil bei den Temperaturen im Schweißbereich sind, welche allerdings außerhalb des Schweißbereichs als Teil des Eckverbinderwinkels angeordnet sein können.

Fig. 4 zeigt eine zweite einer Vielzahl von Varianten für den Eckverbinderwinkel 16 mit zwei Federschenkeln 19. Auch hier weisen die Federschenkel 19 zwei Anlagewandungen 20a und 20b auf, welche einen variablen Abstand zueinander unter Ausbildung einer Rückstellkraft aufweisen können.

Hier sind die beiden Anlagewandungen 20a und 20b über einen Federsteg 18 miteinander verbunden, welcher sich bei Verringerung des Abstandes der Anlagewandungen 20a und 20b, unter Biegeverformung gegen einen Anschlag 17 abstützt. Dieser Anschlag 17 ist in Fig. 4 als Kalotte ausgebildet in welchem ein kugelförmiger Endabschnitt des Federstegs 18 einliegt.

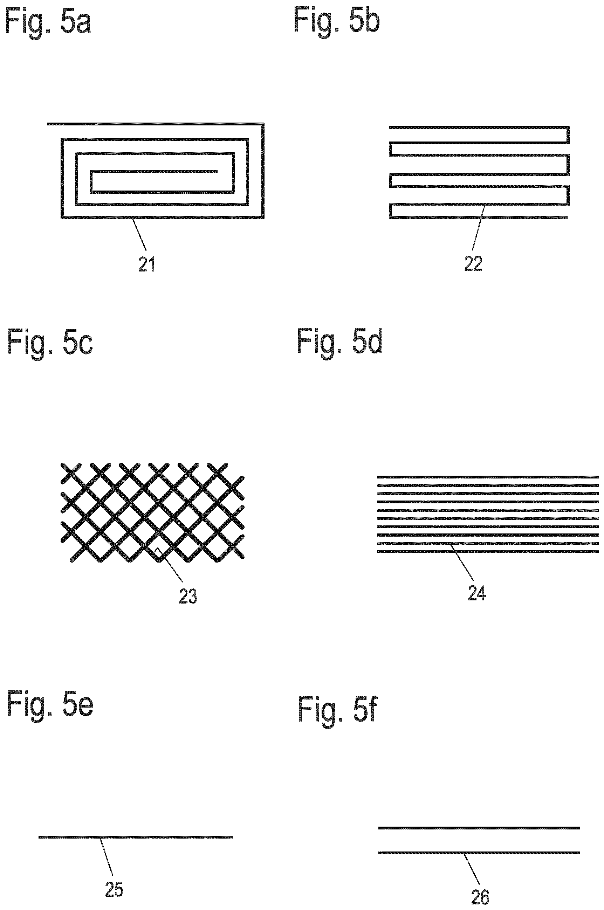

Fig. 5a-5f zeigt mehrere Varianten von Schweißgeometrien, welche als Schweißlinie oder als Flächenschweißgeometrie zur Verbindung eines Profils mit einem Schenkel eines Eckverbinderwinkels, wie sie z.B. in Fig. 3 und 4 gezeigt sind, im Rahmen einer Laserverschweißung genutzt werden können.

Fig. 5a zeigt eine einzige Schweißlinie 21 in einer spiralförmige Schweißgeometrie.

Fig. 5b zeigt eine einzige Schweißlinie 22 in mäanderförmiger Schweißgeometrie.

Fig. 5c zeigt ein Kreuzmuster 23 als Flächenschweißverbindung aus mehreren sich überkreuzenden Schweißlinien.

Fig. 5d zeigt ein Schweißmuster 24 als Flächenschweißverbindung aus mehreren parallel zueinander angeordneten Schweißlinien 25.

Fig. 5e zeigt eine einzige geradlinige Schweißlinie 15 und Fig. 5f zeigt zwei parallel zueinander verlaufende Schweißlinien 26.

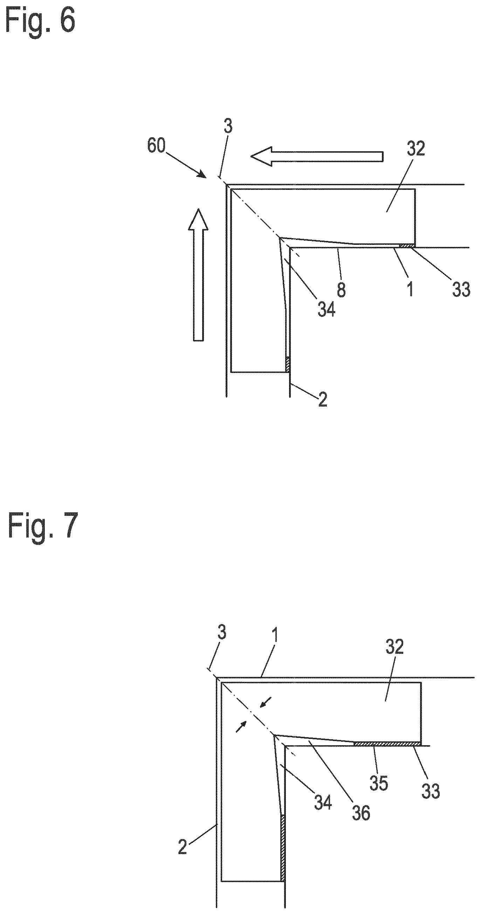

Fig. 6 zeigt eine Eckverbindung 50, wie sie beispielsweise in Fig. 1 und 2 im Bereich der Profilkammer 8 vorliegen kann. Fig. 6 weist hierfür eine weitere Variante eines Eckverbinderwinkels 32 auf. Dieser der Eckverbinderwinkel 32 ist zur besseren Stabilisierung der Eckverbindung aus einem Vollmaterial gefertigt.

In Fig. 6 ist eine anfängliche Schweißverbindung 33 unter Stoffschluss der Profilwandung einer Profilkammer 8 und des Eckverbinderwinkels 32 einer Eckverbindung 60 ausgebildet. Der Abstand 34 zwischen dem Eckverbinderwinkel 32 und der Profilwandung der Profilkammer 8 ist nicht uniform, sondern nimmt in Richtung des Schenkelübergangs bzw. dem Kontaktbereich 3 der beiden Profile 1 und 2 allmählich oder sprunghaft zu. Dies liegt daran, dass die Winkelinnenfläche 36 zumindest im Kontaktbereich der beiden Schenkel des Eckverbinderwinkels einen kleineren Winkel definiert als die Längsachsen der beiden Schenkel des Eckverbinderwinkels. Entsprechend verringert sich der Durchmesser und/oder der Querschnitt des Eckverbinderwinkels 32 vom Ende des Schenkels in Richtung des Schenkelübergangs von einem Schenkel in den anderen Schenkel.

In Fig. 6 sind überdies die Schweißrichtungen zur Erzeugung der Schweißnähte der Eckverbindung 60 dargestellt. Sie erfolgen parallel zur Längsachse A von einem dem Kontaktbereich 3 fernen Startpunkt zu einem dem Kontaktbereich 3 nahen Endpunkt hin.

Der Grund für diese ungewöhnliche konstruktive Ausgestaltung des Eckverbinderwinkels 32 ergibt sich aus dem anfänglichen Schweißzustand der Fig. 6 und dem final-verschweißten Zustand der Fig. 7. Dabei wächst die Schweißverbindung 33 um einen weiteren Bereich 35 an. Bei Abkühlen aufgrund der temperaturbedingten Materialschrumpfung verringert sich der Abstand 34 im Bereich der Schweißverbindung 33. Beim Erkalten zieht sich die stoffschlüssige Verbindung zwischen dem Metallprofil und dem Eckverbinderwinkel 32 zusammen und setzt die Profile im Kontaktbereich 3 aneinander unter eine Vorspannung, so dass diese durch diese zusätzliche Kraft aneinandergepresst werden. Dieser Eckanzug durch die bereitgestellte Vorspannung in Folge der Beachtung der Schweißfolge sorgt für eine bessere Abdichtung im Kontaktbereich 3.

Die in Fig. 1-7 gezeigte Variante kann ohne Öffnung der Profilwand durch Durchschweißen erfolgen. Es ist allerdings auch möglich, einen Durchbruch in der Profilwand, z.B. eine Bohrung, zu schaffen, mit welchem der Laserstrahl direkt auf den Schweißbereich zwischen der Profilwand und dem Eckverbinderwinkel geleitet wird. Diese auch als Schlüsselloch-Verfahren bekannte Technik ermöglicht einen gezielteren Energieeintrag, benötigt allerdings ein eher unvorteilhaftes Öffnen des Profils mit dem anschließenden Erfordernis einer möglichen Abdichtung des Durchbruchs.

Fig. 8-10 beschreibt eine weitere Variante der Verschweißung zweier Profile 1 und 2 zur Ausbildung einer Eckverbindung 70. Dabei wird die Profilwand 1 oder 2 in Vorbereitung in einem ersten Schritt 101 auf die Verschweißung endständig abgeschrägt und zwar derart, dass die einander zugewandten Stirnflächen 27 und 28 der Profilwände der jeweiligen Profile 1 und 2 nicht, wie üblich plan, sondern spitz-zulaufend zueinander im Kontaktbereich 3 ausgebildet sind.

In einem zweiten Schritt 102 erfolgt das Aufeinanderpressen beider Stirnflächen 27 und 28 unter Ausbildung zweite Bördelkanten 29 und 30 bei Einwirken eines entsprechenden Anpressdrucks jenseits des Kontaktbereichs 3. Dies vergrößert die Fügestelle zugunsten einer stabileren Verbindung.

Schließlich erfolgt in einem dritten Schritt 103 die Verschweißung unter Stoffschluss durch Zuleiten eines Laserstrahls auf den Kontaktbereich.

Dabei bildet sich eine Schweißverbindung 31 aus, welche in Fig. 10 gegenüber den benachbarten Flächen sichtseitig hervorsteht. Die Schweißnaht 31 kann bei Abschrägung im ersten Schritt 101 in entgegengesetzter Richtung als in Fig. 8 dargestellt selbstverständlich auch entlang der Rückseite R hervorstehen. Dieses Hervorstehen der Schweißnaht 31 ist keine zwingende Folge des Laserschweißens, sondern lediglich eine Folge des Materialüberstandes der Bördelkanten 29 und 30.

Die Schweißnaht kann durch eine Nachbehandlung, z.B. eine nochmalige Laserbestrahlung, in ihrer Höhe verringert werden. Weiterhin kann die Schweißnaht, bei Schädigung der Beschichtung, durch lokalen Beschichtungsauftrag, z.B. durch Sputtern von Farbpartikel, erneut beschichtet werden. Auch hierfür kann eine Laserbehandlung zum Verschmelzen partikulärer Beschichtungsanteile genutzt werden. Insgesamt wird durch das vorbeschriebene Verfahren zur Ausbildung der direkten Eckverbindung 70 zwischen den Profilen 1 und 2 unter Verwendung eines Laserschmelzverfahrens eine lediglich geringe Aufwölbung im Kontaktbereich realisiert, bei gleichzeitigem geringem Abbrand der Beschichtung im Bereich der Schweißnaht.

### Bezugszeichen

- 1: Profil
- 2: Profil
- 3: Kontaktbereich
- 4: Nut
- 5: Nut
- 6, 6': Schweißverbindung
- 7, 7': Schweißverbindung
- 8: Profilkammer
- 9: Profilkammer
- 10, 10': Schweißverbindung
- 11, 11': Schweißverbindung
- 12: Eckverbinderwinkel
- 13a: Anlagewandung
- 13b: Anlagewandung
- 14: elastisch-verformbare Stege
- 15: Federschenkel
- 16: Eckverbinderwinkel
- 17: Anschlag
- 18: Federsteg
- 19: Federschenkel
- 20a: Anlagewandung
- 20b: Anlagewandung
- 21: Schweißlinie
- 22: Schweißlinie
- 23: Kreuzmuster
- 24: Schweißmuster
- 25: Schweißlinie
- 26: Schweißlinien
- 27: Stirnfläche
- 28: Stirnfläche
- 29: Bördelkante
- 30: Bördelkante
- 31: Schweißverbindung
- 32: Eckverbinderwinkel
- 33: Schweißverbindung
- 34: Abstand
- 35: Bereich
- 36: Winkelinnenfläche

- 50: Eckverbindung
- 60: Eckverbindung
- 70: Eckverbindung

- R, R': Rückseite
- S, S': Sichtseite
- L: Längsachse (Metallprofil)

- 101: erster Schritt
- 102: zweiter Schritt
- 103: dritter Schritt

## Patentansprüche

1. Fenster-, Tür- und/oder Fassadenkonstruktion umfassend eine Eckverbindung (50, 60, 70) mit zwei miteinander durch eine oder mehrere Schweißverbindungen (6, 7, 6' ,7', 10, 10', 11, 11', 33) verbundene Metallprofile (1, 2), wobei die Schweißverbindung oder Schweißverbindungen (6, 7, 6' ,7', 10, 10', 11, 11', 31, 33) als eine laserverschweißte Verbindung ausgebildet ist., **dadurch gekennzeichnet, dass** die Schweißverbindung (6, 7, 6' ,7', 10, 10', 11, 11', 31, 33) als Schweißnaht oder Flächenschweißgeometrie gegenüber den benachbarten Bereichen als Vertiefung ausgebildet ist.

2. Fenster-, Tür- und/oder Fassadenkonstruktion nach Anspruch 1, **dadurch gekennzeichnet, dass** benachbart zur laserverschweißten Verbindung ein lackierter Bereich als Abbrandbereich ausgebildet ist, welcher Produkte der thermischen Zersetzung des Lackes aufweist.

3. Fenster-, Tür- und/oder Fassadenkonstruktion nach Anspruch 2, **dadurch gekennzeichnet, dass** der lackierte Bereich umfassend die Produkte der thermischen Zersetzung des Lackes, als Abbrandbereich, sich in einer Breite von weniger als 2 mm, vorzugsweise weniger als 1 mm, von der lasergeschweißten Verbindung weg erstreckt.

4. Fenster-, Tür- und/oder Fassadenkonstruktion nach einem der vorhergehenden Ansprüche, **dadurch gekennzeichnet, dass** die Schweißverbindung (31) die Metallprofile (1, 2) der Eckverbindung (70) unmittelbar miteinander verbindet.

5. Fenster-, Tür- und/oder Fassadenkonstruktion nach einem der vorhergehenden Ansprüche, **dadurch gekennzeichnet, dass** die Schweißverbindung (31) zumindest bereichsweise entlang einer Gehrung entlang einer Sichtseite (S) der Eckverbindung (70) angeordnet ist und besonders bevorzugt umlaufend entlang der Gehrung der Eckverbindung (70) angeordnet ist.

6. Fenster-, Tür- und/oder Fassadenkonstruktion nach einem der vorhergehenden Ansprüche, **dadurch gekennzeichnet, dass** die Schweißverbindung und/oder Schweißverbindungen (6, 7, 6' ,7', 10, 10', 11, 11', 33) die Profile (1, 2) mittelbar, vorzugsweise mittels eines Eckverbinderwinkels (12, 16, 32), miteinander verbindet, wobei besonders bevorzugt die Profile (1, 2) jeweils Profilkammern (8, 9) aufweist, wobei der Eckverbinderwinkel (12, 16, 32) zumindest zwei Schenkel aufweist, welche in den Profilkammern (8, 9) eingesteckt sind.

7. Fenster-, Tür- und/oder Fassadenkonstruktion nach Anspruch 6, **dadurch**
**gekennzeichnet, dass** die Schweißverbindung (6, 7, 6' ,7', 10, 10', 11, 11', 33) zumindest entlang einer Außenseite senkrecht zur Sichtseite der Eckverbindung (50, 60) angeordnet ist.

8. Fenster-, Tür- und/oder Fassadenkonstruktion nach Anspruch 7, **dadurch**
**gekennzeichnet, dass** die Schweißverbindung (6, 7, 6' ,7', 10, 10', 11, 11', 33) als Schweißnaht einen Längsverlauf aufweist, welcher parallel zur Längsachse (A) des jeweiligen Metallprofils (1, 2) verläuft oder dass eine Flächenschweißgeometrie eine Haupterstreckungsrichtung parallel zur Längsachse (A) des jeweiligen Metallprofils (1, 2) aufweist.

9. Fenster-, Tür- und/oder Fassadenkonstruktion nach einem der vorhergehenden Ansprüche, **dadurch gekennzeichnet, dass** die Konstruktion weiter einen Eckverbinderwinkel (12,16,32) aufweist, wobei der Eckverbinderwinkel (12, 16, 32) ausgebildet ist zum Aufbau einer Vorspannung zwischen zwei aneinander anliegenden Kontaktflächen im Kontaktbereich (3) der Metallprofile (1, 2) im montierten Zustand der Eckverbindung (50, 60).

10. Fenster-, Tür- und/oder Fassadenkonstruktion nach einem der vorhergehenden Ansprüche, **dadurch gekennzeichnet, dass** die Konstruktion weiter einen Eckverbinderwinkel (12,16,32) aufweist, wobei die Längsachsen der Schenkel des Eckverbinderwinkels (12, 16, 32) einen ersten Winkel definieren, wobei eine aus beiden Schenkeln gebildete Winkelinnenfläche (36) im Kontaktbereich beider Schenkel eine Ausnehmung aufweist oder einen zweiten Winkel definiert, welcher kleiner ist als der erste Winkel.

11. Fenster-, Tür- und/oder Fassadenkonstruktion nach einem der vorhergehenden Ansprüche, **dadurch gekennzeichnet, dass** die Konstruktion weiter einen Eckverbinderwinkel (12,16,32) aufweist, wobei die zwei Schenkel des Eckverbinderwinkels (12, 16) als Federschenkel (15, 19) zum Abstützen gegen eine Profilwandung ausgebildet sind.

12. Fenster-, Tür- und/oder Fassadenkonstruktion nach einem der vorhergehenden Ansprüche, **dadurch gekennzeichnet, dass** die Schweißverbindung innerhalb einer Nut (4, 5) des Profils (1, 2), vorzugsweise entlang eines Nutbodens, besonders bevorzugt entlang einer Kedernut, angeordnet ist.

13. Fenster-, Tür- und/oder Fassadenkonstruktion nach einem der vorhergehenden Ansprüche, **dadurch gekennzeichnet, dass** die Schweißverbindung (6, 7, 6' ,7', 10, 10', 11, 11', 31, 33) als eine durchgeschweißte Schweißverbindung ausgebildet ist, derart, dass zumindest eine Profilwandung über die Gesamtstärke der Profilwand ein erstarrtes Schmelzbad bildet und, vorzugsweise bei Einsatz eines Eckverbinderwinkels (12, 16, 32) auch ein Teilbereich des Eckverbinderwinkels (12, 16, 32) einen Teil des Schmelzbades bildet.

14. Fenster-, Tür- und/oder Fassadenkonstruktion nach einem der vorhergehenden Ansprüche, **dadurch gekennzeichnet, dass** die Schweißverbindung (6, 7, 6' 7', 10, 10', 11, 11', 31, 33) schweißzusatzfrei ausgebildet ist.

15. Verfahren zur Herstellung einer Eckverbindung (50, 60, 70) einer Fenster-, Tür- und/oder Fassadenkonstruktion, gemäß einem der vorhergehenden Ansprüche, **gekennzeichnet durch die folgenden Schritte:**
a) Bereitstellen zweier Metallprofile (1, 2), vorzugsweise beschichteter Metallprofile, und winkliges Aneinander-Positionieren beider Metallprofile (1, 2); und
b) Verschweißen beider Metallprofile (1, 2) unter Verwendung eines Laser-Schweißgerätes, insbesondere eines Faserlaser-Schweißgerätes,
wobei die Leistung des Laser-Schweißgerätes derart eingestellt ist, dass eine durch eine Profilwandung oder entlang einer in einem Kontaktbereich (3) zweier Profilwandungen der beiden Metallprofile (1, 2) durchgeschweißte Schweißverbindung (6, 7, 6' ,7', 10, 10', 11, 11', 31, 33) bereitgestellt wird;
wobei im Verfahren keine Schweißzusätze eingesetzt werden.

16. Verfahren nach Anspruch 15, **dadurch gekennzeichnet, dass** das Bereitstellen in Schritt a) unter Ausbildung zweier spitz-zulaufender Stirnflächen (27, 28) der Profilwandungen der Metallprofile (1, 2), insbesondere durch Konturfräsen, erfolgt;
**dass** das Aneinander-Positionieren der Metallprofile (1, 2) derart erfolgt, dass die Stirnflächen (27, 28) derart gegeneinander gepresst werden, dass eine randseitige Umformung der beiden Profilwände, vorzugsweise unter Ausbildung einer Bördelung (29, 30) erfolgt; und
**dass** anschließend ein Verschweißen im Kontaktbereich (3) des umgeformten Randbereichs unter Ausbildung der durchgeschweißten Schweißverbindung (31) erfolgt.

17. Verfahren nach Anspruch 15, **dadurch gekennzeichnet,**
**dass** das Bereitstellen durch ein Einführen jeweils eines Schenkels des Eckverbinderwinkels (12, 16, 32) in eine Profilkammer (8, 9) des jeweiligen Metallprofils (1, 2) erfolgt, so dass in jedem der beiden Metallprofile (1, 2) jeweils ein Schenkel des Eckverbinderwinkels (12, 16, 32) angeordnet ist; und
**dass** zwischen jedem Metallprofil (1, 2) und dem Eckverbinderwinkel (12, 16, 32) zumindest eine durchgeschweißte Schweißverbindung (6, 7, 6' ,7', 10, 10', 11, 11', 33), vorzugsweise unter Ausbildung einer Vorspannung, gebildet wird, welche besonders bevorzugt außerhalb des Kontaktbereichs (3) und besonders bevorzugt außerhalb der Sichtseite (S, S') der beiden Metallprofile (1, 2) angeordnet sind.

18. Verfahren nach einem der Ansprüche 15 bis 17, **dadurch gekennzeichnet, dass** das Verfahren ein Nacharbeiten umfasst, welches eine weitere Laserbearbeitung zur Ausbildung einer Beschichtung, insbesondere durch Schmelzen von Beschichtungskomponenten oder durch strahlenaktivierte Vernetzung des Beschichtungsmaterials oder durch Verdunstung von Beschichtungsbestandteilen umfasst.

## Claims

1. Window, door, and/or façade construction comprising a corner joint (50, 60, 70) having two metal profiles (1, 2) connected to each other by one or more welded joints (6, 7, 6', 7', 10, 10', 11, 11', 33), wherein the welded joint or welded joints (6, 7, 6', 7', 10, 10', 11, 11', 31, 33) is/are formed as a laser-welded joint,
**characterized in that** the welded joint (6, 7, 6', 7', 10, 10', 11, 11', 31, 33) is designed as a weld seam or surface weld geometry as a depression relative to the adjacent areas.

2. Window, door, and/or façade construction according to claim 1, **characterized in that** adjacent to the laser-welded joint, a painted area is formed as a burn-off area, which contains products of the thermal decomposition of the paint.

3. Window, door, and/or façade construction according to claim 2, **characterized in that** the painted area, comprising the products of the thermal decomposition of the paint, as a burn-off area, extends at a width of less than 2 mm, preferably less than 1 mm, away from the laser-welded joint.

4. Window, door, and/or façade construction according to one of the preceding claims, **characterized in that** the welded joint (31) directly connects the metal profiles (1, 2) of the corner joint (70) to each other.

5. Window, door, and/or façade construction according to one of the preceding claims, **characterized in that** the welded joint (31) is arranged at least in areas along a miter along a visible side (S) of the corner joint (70) and is particularly preferably arranged circumferentially along the miter of the corner joint (70).

6. Window, door, and/or façade construction according to one of the preceding claims, **characterized in that** the welded joint and/or welded joints (6, 7, 6', 7', 10, 10', 11, 11', 33) connect the profiles (1, 2) indirectly, preferably by means of a corner connector bracket (12, 16, 32), wherein particularly preferably the profiles (1, 2) each have profile chambers (8, 9), wherein the corner connector bracket (12, 16, 32) has at least two legs which are inserted into the profile chambers (8, 9).

7. Window, door, and/or façade construction according to claim 6, **characterized in that** the welded joint (6, 7, 6', 7', 10, 10', 11, 11', 33) is arranged at least along an outer side perpendicular to the visible side of the corner joint (50, 60).

8. Window, door, and/or façade construction according to claim 7, **characterized in that** the welded joint (6, 7, 6', 7', 10, 10', 11, 11', 33) has a longitudinal course as a weld seam, which runs parallel to the longitudinal axis (A) of the respective metal profile (1, 2), or **in that** a surface weld geometry has a main direction of extension parallel to the longitudinal axis (A) of the respective metal profile (1, 2).

9. Window, door, and/or façade construction according to one of the preceding claims, **characterized in that** the construction further has a corner connector bracket (12, 16, 32), wherein the corner connector bracket (12, 16, 32) is designed to build up a pretension between two mutually abutting contact surfaces in the contact area (3) of the metal profiles (1, 2) when the corner connection (50, 60) is assembled.

10. Window, door, and/or façade construction according to one of the preceding claims, **characterized in that** the construction further comprises a corner connector bracket (12, 16, 32), wherein the longitudinal axes of the legs of the corner connector bracket (12, 16, 32) define a first angle, wherein an inner angle surface (36) formed by both legs has a recess in the contact area of both legs or defines a second angle which is smaller than the first angle.

11. Window, door, and/or façade construction according to one of the preceding claims, **characterized in that** the construction further comprises a corner connector bracket (12, 16, 32), wherein the two legs of the corner connector bracket (12, 16) are designed as spring legs (15, 19) for support against a profile wall.

12. Window, door and/or façade construction according to one of the preceding claims, **characterized in that** the welded joint is arranged within a groove (4, 5) of the profile (1, 2), preferably along a groove base, particularly preferably along a weatherstrip groove.

13. Window, door, and/or façade construction according to one of the preceding claims, **characterized in that** the welded joint (6, 7, 6', 7', 10, 10', 11, 11', 31, 33) is designed as a full-penetration welded joint in such a way that at least one profile wall forms a solidified molten pool over the entire thickness of the profile wall and, preferably when using a corner connector bracket (12, 16, 32), a section of the corner connector bracket (12, 16, 32) also forms part of the molten pool.

14. Window, door, and/or façade construction according to one of the preceding claims, **characterized in that** the welded joint (6, 7, 6', 7', 10, 10', 11, 11', 31, 33) is formed without welding filler material.

15. Method for producing a corner joint (50, 60, 70) of a window, door, and/or façade construction according to one of the preceding claims, **characterized by the following steps:**
a. providing two metal profiles (1, 2), preferably coated metal profiles, and positioning both metal profiles (1, 2) at an angle to each other; and
b. welding both metal profiles (1, 2) using a laser welding device, in particular a fiber laser welding device, wherein the power of the laser welding device is set such that a welded joint (6, 7, 6', 7', 10, 10', 11, 11', 31, 33) is provided through a profile wall or with full penetration along a contact area (3) of two profile walls of the two metal profiles (1, 2);
wherein no welding additives are used in the method.

16. Method according to claim 15, **characterized in that** the provision in step a) is carried out by forming two tapered end faces (27, 28) of the profile walls of the metal profiles (1, 2), in particular by contour milling;
**in that** the metal profiles (1, 2) are positioned relative to each other in such a way that the end faces (27, 28) are pressed against each other in such a way that the two profile walls are formed at the edges, preferably with the formation of a flanging (29, 30); and
**in that** welding is then carried out in the contact area (3) of the deformed edge area, forming the full-penetration welded joint (31).

17. Method according to claim 15, **characterized in that** the provision is carried out by inserting in each case one leg of the corner connector bracket (12, 16, 32) into a profile chamber (8, 9) of the respective metal profile (1, 2), so that in each of the two metal profiles (1, 2) one leg of the corner connector bracket (12, 16, 32) is arranged in each case in it; and
**in that** between each metal profile (1, 2) and the corner connector bracket (12, 16, 32) at least one full-penetration welded joint (6, 7, 6', 7', 10, 10', 11, 11', 33) is formed, preferably with the formation of a pretension, which are particularly preferably arranged outside the contact area (3) and particularly preferably outside the visible side (S, S') of the two metal profiles (1, 2).

18. Method according to one of claims 15 to 17, **characterized in that** the method comprises reworking, which comprises further laser processing to form a coating, in particular by melting coating components or by radiation-activated cross-linking of the coating material or by evaporation of coating components.

## Revendications

1. Construction de fenêtre, de porte et/ou de façade comprenant un joint d'angle (50, 60, 70) doté de deux profilés métalliques (1, 2) reliés l'un à l'autre par une ou plusieurs soudures (6, 7, 6', 7', 10, 10', 11, 11', 33), dans laquelle la soudure ou les soudures (6, 7, 6', 7', 10, 10', 11, 11', 31, 33) sont réalisées comme soudures laser, **caractérisée en ce que** la soudure (6, 7, 6', 7', 10, 10', 11, 11', 31, 33) est réalisée comme joint soudé ou la géométrie de la soudure de surface est réalisée comme dépression par rapport aux zones adjacentes.

2. Construction de fenêtre, de porte et/ou de façade selon la revendication 1, **caractérisée en ce qu'**une zone vernie adjacente à la soudure laser est réalisée comme zone de combustion, laquelle comporte des produits de la décomposition thermique du vernis.

3. Construction de fenêtre, de porte et/ou de façade selon la revendication 2, **caractérisée en ce que** la zone vernie comprenant les produits de la décomposition thermique du vernis, en tant que zone de combustion, s'étend dans une largeur inférieure à 2 mm, de préférence inférieure à 1 mm, à partir de la soudure laser.

4. Construction de fenêtre, de porte et/ou de façade selon l'une des revendications précédentes, **caractérisée en ce que** la soudure (31) relie les profilés métalliques (1, 2) du joint d'angle (70) directement l'un à l'autre.

5. Construction de fenêtre, de porte et/ou de façade selon l'une des revendications précédentes, **caractérisée en ce que** la soudure (31) est disposée au moins par zones le long d'un onglet le long d'un côté apparent (S) du joint d'angle (70) et est tout particulièrement disposé autour de l'onglet du joint d'angle (70).

6. Construction de fenêtre, de porte et/ou de façade selon l'une des revendications précédentes, **caractérisée en ce que** la soudure et/ou les soudures (6, 7, 6', 7', 10, 10', 11, 11', 33) relient les profilés (1, 2) l'un à l'autre indirectement, de préférence au moyen d'une équerre de raccordement (12, 16, 32), dans laquelle les profilés (1, 2) comportent tout particulièrement des chambres profilées (8, 9), dans laquelle l'équerre de raccordement (12, 16, 32) comporte au moins deux pattes, lesquelles sont insérées dans les chambres profilées (8, 9).

7. Construction de fenêtre, de porte et/ou de façade selon la revendication 6, **caractérisée en ce que** la soudure (6, 7, 6', 7', 10, 10', 11, 11', 33) est disposée au moins le long d'un côté externe perpendiculaire au côté apparent du joint d'angle (50, 60).

8. Construction de fenêtre, de porte et/ou de façade selon la revendication 7, **caractérisée en ce que** la soudure (6, 7, 6', 7', 10, 10', 11, 11', 33) comporte comme joint soudé une direction longitudinale parallèle à l'axe longitudinal (A) du profilé métallique respectif (1, 2) ou **en ce qu'**une géométrie de soudure de surface comporte une orientation d'étendue principale parallèle à l'axe longitudinal (A) du profilé métallique respectif (1, 2).

9. Construction de fenêtre, de porte et/ou de façade selon l'une des revendications précédentes, **caractérisée en ce que** la construction comporte en outre une équerre de raccordement (12, 16, 32), dans laquelle l'équerre de raccordement (12, 16, 32) est réalisée pour créer une précontrainte entre deux surfaces de contact adjacentes dans la zone de contact (3) des profilés métalliques (1, 2) dans l'état monté du joint d'angle (50, 60).

10. Construction de fenêtre, de porte et/ou de façade selon l'une des revendications précédentes, **caractérisée en ce que** la construction comporte en outre une équerre de raccordement (12, 16, 32), dans laquelle les axes longitudinaux des pattes de l'équerre de raccordement (12, 16, 32) définissent un premier angle, dans laquelle une surface d'angle intérieure (36) formée à partir des deux pattes comporte un évidement dans la zone de contact des deux pattes ou définit un deuxième angle plus petit que le premier angle.

11. Construction de fenêtre, de porte et/ou de façade selon l'une des revendications précédentes, **caractérisée en ce que** la construction comporte en outre une équerre de raccordement (12, 16, 32), dans laquelle les deux pattes de l'équerre de raccordement (12, 16) sont réalisées comme branches de ressort (15, 19) destinées à s'appuyer contre une paroi de profilé.

12. Construction de fenêtre, de porte et/ou de façade selon l'une des revendications précédentes, **caractérisée en ce que** la soudure est disposée à l'intérieur d'une rainure (4, 5) du profilé (1, 2), de préférence le long d'un fond de rainure, tout particulièrement le long d'une gorge.

13. Construction de fenêtre, de porte et/ou de façade selon l'une des revendications précédentes, **caractérisée en ce que** la soudure (6, 7, 6', 7', 10, 10', 11, 11', 31, 33) est réalisée comme une soudure à pénétration totale, de sorte qu'au moins une paroi de profilé forme sur toute l'épaisseur de la paroi de profilé un bain de fusion solidifié et, de préférence lors de l'utilisation d'une équerre d'angle (12, 16, 32) une zone partielle de l'équerre d'angle (12, 16, 32) forme également une partie du bain de fusion.

14. Construction de fenêtre, de porte et/ou de façade selon l'une des revendications précédentes, **caractérisée en ce que** la soudure (6, 7, 6', 7', 10, 10', 11, 11', 31, 33) est réalisée sans métal d'apport.

15. Procédé de fabrication d'un joint d'angle (50, 60, 70) d'une construction de fenêtre, de porte et/ou de façade selon l'une des revendications précédentes, **caractérisé par** les étapes suivantes :
a) préparation de deux profilés métalliques (1, 2), de préférence de profilés métalliques revêtus, et positionnement en coin des deux profilés métalliques (1, 2) ; et
b) soudure des deux profilés métalliques (1, 2) par utilisation d'un appareil de soudure laser, en particulier d'un appareil de soudure laser à fibre, dans lequel la puissance de l'appareil de soudure laser est réglée de sorte qu'une soudure à pénétration totale (6, 7, 6', 7', 10, 10', 11, 11', 31, 33) soudée à travers une paroi de profilé ou le long d'une des deux parois de profilé, située dans une zone de contact (3), des deux profilés métalliques (1, 2) est préparée ;
dans lequel aucun métal d'apport n'est utilisé dans le procédé.

16. Procédé selon la revendication 15, **caractérisé en ce que** la préparation dans l'étape a) s'effectue en réalisant deux surfaces frontales (27, 28) en pointe des parois des profilés métalliques (1, 2), en particulier par détourage ;
**en ce que** le positionnement relatif des profilés métalliques (1, 2) s'effectue de sorte que les surfaces frontales (27, 28) sont pressées l'une contre l'autre de façon à ce qu'il en résulte un formage périphérique des deux parois de profilé, de préférence pour réaliser un sertissage (29, 30) ; et
**en ce qu'**ensuite une soudure dans la zone de contact (3) de la zone de bord mise en forme est effectuée afin de réaliser la soudure à pénétration totale (31).

17. Procédé selon la revendication 15, **caractérisé en ce que** la préparation s'effectue par une insertion respective d'une patte de l'équerre de raccordement (12, 16, 32) dans une chambre (8, 9) du profilé métallique respectif (1, 2) de sorte qu'une patte de l'équerre de raccordement (12, 16, 32) est respectivement disposée dans chacun des deux profilés métalliques (1, 2) ; et
**en ce qu'**entre chaque profilé métallique (1, 2) et l'équerre de raccordement (12, 16, 32) est formée au moins une soudure à pénétration totale (6, 7, 6', 7', 10, 10', 11, 11', 33), réalisant de préférence une précontrainte, lesquelles sont disposées tout particulièrement à l'extérieur de la zone de contact (3) et tout particulièrement à l'extérieur des côtés apparents (S, S') des deux profilés métalliques (1, 2).

18. Procédé selon l'une des revendications 15 à 17, **caractérisé en ce que** le procédé comprend un travail de finition, lequel comprend un traitement ultérieur au laser afin de réaliser un revêtement, en particulier par fusion de composants de revêtement ou par réticulation activée par rayonnement des matériaux de revêtement ou par évaporation d'éléments de revêtement.
